# EUROPEAN PATENT APPLICATION

(11) **EP 4 406 716 A1**
(43) Date of publication of application: **31.07.2024**
(21) Application number: 22887457.4
(22) Date of filing: 18.10.2022
(51) Int. Cl.: B28D 1/14, E04B 9/18

(54) **JIG SET FOR CONSTRUCTING CEILING ANCHOR BOLT AND INSTALLING FULL THREAD BOLT AND FULL THREAD BOLT CONSTRUCTION METHOD USING SAME**

(30) Priority: 01.11.2021 KR 20210147935
(71) Applicant: Seoul Fastening Co., Ltd., Seoul 08639 (KR)
(72) Inventor: SONG, Yun Ku, Seoul 06213 (KR)
(74) Representative: Danubia Patent & Law Office LLC
(86) International application number: PCT/KR2022/015795
(87) International publication number: WO 2023/075261

(57) **Abstract**

The present invention relates to a jig tool set for constructing a full thread bolt, and a method of constructing a full thread bolt using the same, wherein the jig too set includes a drill bit, a connecting rod, an anchor bot set, a full thread bolt, and a drill gun, so that a worker performs drilling work for a ceiling slab and a full thread bolt installation work at once in place, thereby improving work efficiency and securing safety.

To this end, the present invention includes a drill bit in which a drilling part is formed to secure a hole having a certain depth by drilling a ceiling slab made of concrete at one end thereof, an anchor bolt set fixed to the hole formed in the ceiling slab through the drill bit and configured to form a full thread bolt having a certain length in the ceiling slab, a connecting rod having a certain length so that, as the drill bit and the anchor bolt set are sequentially seated at one end thereof, a worker that performs drilling work and full thread bolt installation work performs the work on the ground without moving to a location close to the ceiling slab, and a drill gun formed at the other end of the connecting rod and configured to provide a rotational force and a hitting force so that the drilling work and the full thread bolt installation work are performed on the ground.

## Description

### [Technical Field]

The present invention relates to a jig tool set for constructing a ceiling anchor bolt and installing a full thread bolt, and a method of constructing a full thread bolt using the same, and more particularly, to a jig tool set for constructing a ceiling anchor bolt and installing a full thread bolt, which includes a drill bit, a connecting rod, an anchor bolt set, a holder for installing a full thread bolt, and a drill gun, wherein a worker drills a ceiling slab, and at the same time, sets an anchor and installs a full thread bolt in place, and thus work efficiency can be improved, and a ladder is not required, industrial accidents caused by work at high positions can be significantly reduced, and thus safety can be secured, and a method of constructing a full thread bolt using the same.

### [Background Art]

In general, various installations (hereinafter, referred to as "ceiling installations") such as partitions used to divide a space and cooling and heating ducts as well as various pipes such as a gas pipe, water supply and sewage pipes, cooling and heating pipes, and various electrical and communication facility-related pipes are installed in ceiling concrete slabs of industrial facilities, buildings, and the like.

In installation states of the ceiling installations, (1) a high-place workbench is installed on the ground at a ceiling height, (2) a worker climbs on the high-place workbench to form an insertion hole having a certain depth in a ceiling, ③ an anchor bolt is inserted into the formed insertion hole, and ④ the anchor bolt is hit or tightened so that the anchor bolt is firmly fixed to the insertion hole. In this case, a hammer drill is used to form the insertion hole in concrete, and a manual work or an impact drill by which the worker hits an anchor setting punch using a hammer is used to fix the anchor bolt.

Continuously, a construction method is performed in which, (5) after a full thread bolt having a certain length is fastened to the anchor bolt fixed to a ceiling, ⑥ the ceiling installation is fixed using the full thread bolt.

That is, preceding work of fixing the anchor to a ceiling slab and installing the full thread bolt on the ceiling slab should be performed to construct the ceiling installation.

However, in the fixing of the anchor and the construction of the full thread bolt according to the related art, as the worker directly climbs onto the high-place workbench to perform the work, the risk of accidents is higher according to the working being performed at a high position than on the ground.

Further, when the worker climbs on the high-place workbench, the worker should bring a jig tool required when the anchor is fixed and the full thread bolt is installed. When any one tool is missed, the worker should come down from the high-place workbench, bring the missing tool, and climb on the high-place workbench again, and thus a long time is taken for preparatory work.

Further, as described above, a working time is long due to use of many jig tools in drilling with a hammer drill, hitting an anchor setting punch with a hammer, and hitting an anchor bolt with an impact drill to fix the anchor bolt. Further, chronic neck and shoulder diseases and poor construction occur due to holding a hammer to perform upward hitting.

In summary, work efficiency is degraded due to the risk of work due to fixing the anchor and installing the full thread bolt using a plurality of jig tools in a high-place work space and additional costs due to waste of human and material resources due to additional job labor.

### [Disclosure]

### [Technical Problem]

The present invention is directed to providing a jig tool set for constructing a ceiling anchor bolt and installing a full thread bolt, and a method of constructing a full thread bolt using the same, wherein the jig tool set includes a drill bit, a connecting rod, an anchor bot set, a holder for installing a full thread bolt, and a drill gun, so that a worker performs drilling work for a ceiling slab and an anchor fixing and full thread bolt installation work at once in place, thereby improving work efficiency, and at the same time, securing safety that may reduce significantly reduce industrial accidents following work at a high place.

### [Technical Solution]

One aspect of the present invention provides a jig tool set for constructing a ceiling anchor bolt and installing a full thread bolt, the jig tool set including a drill bit in which a drilling part is formed to secure a hole for installing an anchor having a certain depth by drilling a ceiling slab made of concrete at one end thereof, an anchor bolt set that is fixed to the hole formed in the ceiling slab through the drill bit and forms a full thread bolt having a certain length in the ceiling slab, a connecting rod having a certain length so that, as the drill bit and the anchor bolt set are sequentially seated at one end thereof, a worker that performs drilling work and full thread bolt installation work performs the work on the ground without moving to a location close to the ceiling slab, and a drill gun that is formed at the other end of the connecting rod and provides a rotational force and a hitting force so that the drilling work and the full thread bolt installation work are performed from the ground.

The drill bit may include a drilling part that performs the drilling work on the ceiling slab made of concrete, a first insertion part that is formed at one end of the drilling part, is inserted into one end of the connecting rod, maintains a firmly fixed state with the one end of the connecting rod, and thus supports the drilling part to perform the drilling work by the rotational force and the hitting force provided by the connecting rod, and a ball plunger that is formed on one side of the first insertion part and provides a control force so that the first insertion part is not arbitrarily separated when the first insertion part is inserted into the one end of the connecting rod.

The connecting rod may include a seating part recessed inward in a certain depth and having a seating groove into which one end of the drill bit or the anchor bolt set is inserted, an extension part that extends from the seating part by a certain length and supports the worker to perform the drilling work or the full thread bolt installation work from the ground, and a fixing chuck that is formed at an end of the extension part and supports the drill gun so that one end of the drill gun is stably fixed.

The connecting rod may include a plurality of extension parts according to the ground and a height of the ceiling slab, and a connection bracket that is formed between the plurality of extension parts and supports the extension parts so that the extension parts are used in a general purpose according to a height difference between the ground and the ceiling slab as the plurality of extension parts are fixed to each other.

The connecting rod may include a setting holder that is pressed to one end of the connecting rod and supports the anchor bolt set to use the anchor bolt set in a general purpose regardless of a size of the anchor bolt set.

The connecting rod may include a falling prevention bolt that maintains the setting holder in a state of being formed on one side of the connecting rod and supports the setting holder to prevent fall or loss of the setting holder.

The anchor bolt set may include an anchor part that is inserted into the hole formed in the ceiling slab by the drill bit and provides a fixing force to maintain a state of being firmly fixed to the hole by the hitting force and the rotational force provided by the drill gun, and a full thread bolt extending from one end of the anchor part by a certain length so that the anchor part has a certain length from the ceiling slab when the anchor part is fixed to the ceiling slab.

The drill bit may include at least one inlet through which crushed powder generated during the drilling work is suctioned and which guides the crushed powder such that the crushed powder is collected inside the connecting rod.

At least one outlet penetrating an inside so that the crushed powder moving thereinto is discharged may be included on one side of the connecting rod, and the jig tool set may further include a vacuum suction part that is formed on one side of the connecting rod and prevents the crushed powder from scattering into a work space by suctioning the crushed powder generated during the drilling work by the drill bit using a vacuum pressure.

Another aspect of the present invention provides a method of constructing a full thread bolt using a jig tool set for constructing a ceiling anchor bolt and installing a full thread bolt, the method including a drill bit seating and drilling operation in which a drill gun is fixed to one end of a connecting rod, a drill bit is seated on the other end of the connecting rod, and when the drill gun and the drill bit are completely mounted on the connecting rod, a worker does not move to a position adjacent to a ceiling slab, positions the drill bit on the ceiling slab while gripping the drill gun on the ground, operates the drill gun to provide a rotational force and a hitting force generated by the drill gun to the drill bit through the connecting rod, and thus forms a hole having a certain depth in the ceiling slab, and an anchor bolt setting and full thread bolt fixing operation in which, when the hole having a certain depth is formed in the ceiling slab through the drill bit seating and drilling operation, the drill bit seated on the other end of the connecting rod is extracted, both an anchor bolt set and a full thread bolt are assembled and simultaneously inserted into a setting holder or a seating groove of the connecting rod from which the drill bit is separated, and when an anchor part of the anchor bolt set is positioned toward the ceiling slab, the full thread bolt is supported to maintain a state of being inserted into the connecting rod, and the anchor bolt set is completely seated on the connecting rod, the worker does not move to a position adjacent to the ceiling slab, inserts the anchor part of the anchor bolt set into the hole of the ceiling slab while gripping the drill gun on the ground, operates the drill gun to provide a hitting force and a rotational force generated by the drill gun to the anchor bolt set through the connecting rod, and fixes the anchor part to the ceiling slab, and thus a state in which the full thread bolt formed at one end of the anchor part in a certain length is fixed to the ceiling slab is maintained.

### [Advantageous Effects]

According to the present invention, a jig tool set includes a drill bit, a connecting rod, an anchor bolt set, a seating part, a holder for installing a full thread bolt, and a drill gun, wherein a worker performs drilling work for a ceiling slab and full thread bolt installation work at once in place, thereby improving work efficiency and securing safety.

### [Description of Drawings]

FIG. 1 is a diagram of a jig tool set for constructing a full thread bolt according to a first embodiment of the present invention.
FIG. 2 is a view of a drill bit according to the first embodiment of the present invention.
FIG. 3 is a view of the drill bit according to the first embodiment of the present invention.
FIG. 3A illustrates a straight drill bit, and FIG. 3B illustrates a stepped drill bit.
FIG. 4 is a view illustrating various shapes of the drill bit according to a 1^{st} ~ 4^{th} embodiment of the present invention.
FIG. 5 is a view of a connecting rod according to the first embodiment of the present invention.
FIG. 6 is a view of an anchor bolt set according to the first embodiment of the present invention.
FIG. 7 is a view of a drill gun according to the first embodiment of the present invention.
FIG. 8 is a process flowchart illustrating a method of constructing the full thread bolt using the jig tool set for constructing the full thread bolt according to the first embodiment of the present invention.
FIG. 9 is an operation state diagram of the jig tool set for constructing the full thread bolt according to the first embodiment of the present invention.
FIG. 9A illustrates a state of drilling with the drill bit, and FIG. 9B illustrates a state in which the anchor bolt set and the full thread bolt are fixed to the ceiling slab at once.
FIG. 10 is a diagram of a connecting rod according to a second embodiment of the present invention.
FIGS. 11A to 11C are views of the connecting rod that connects a length according to the second embodiment of the present invention.
FIG. 12 is a view of a connecting rod according to a third embodiment of the present invention.
FIG. 13 is a partially enlarge view illustrating a state in which an anchor bolt set is mounted on the connecting rod according to the third embodiment of the present invention.
FIG. 14 is a view illustrating various shapes of the anchor bolt set according to the fourth embodiment of the present invention.
FIG .15 is view illustrating a fixing relationship between an extension part and a fixing chuck according to a fifth embodiment of the present invention.
FIG. 15A corresponds to a welding method, FIG. 15B corresponds to a bolt fastening method, and FIG. 15C corresponds to a screw fastening method.
FIG .16 is view illustrating a fixing relationship between a seating part and an extension part according to a sixth embodiment of the present invention.
FIG. 17 is a view of a drill bit according to a seventh embodiment of the present invention.
FIG. 18 is a use state diagram of a jig tool set for constructing a full thread bolt according to the seventh embodiment of the present invention.
FIG. 19 is a use state diagram of another example of the jig tool set for constructing the full thread bolt according to the seventh embodiment of the present invention.

### [Modes of the Invention]

Hereinafter, embodiments of the present invention will be described in detail with reference to the accompanying drawings.

### <First Embodiment>

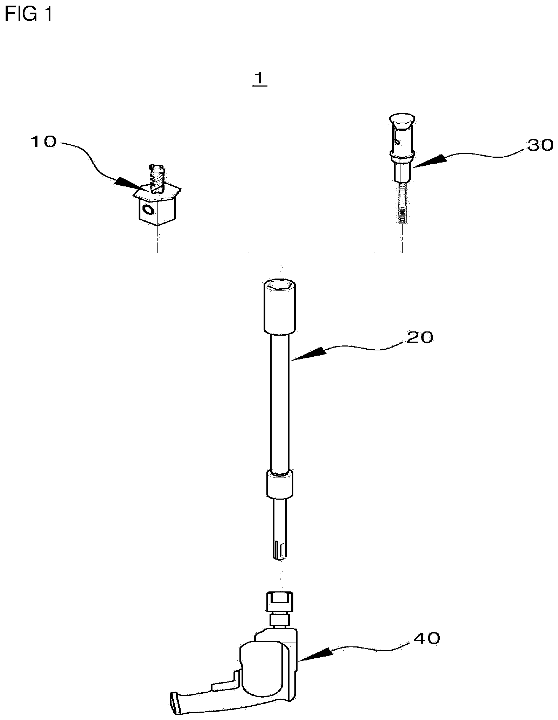

As illustrated in FIG. 1, a jig tool set 1 for constructing a full thread bolt according to a first embodiment includes a drill bit 10, a connecting rod 20, an anchor bolt set 30, and a drill gun 40. A worker may drill a slab in place and set an anchor bolt and install the full thread bolt at once, thereby improving work efficiency and securing safety.

The drill bit 10 functions to form a hole having a certain depth in a ceiling slab.

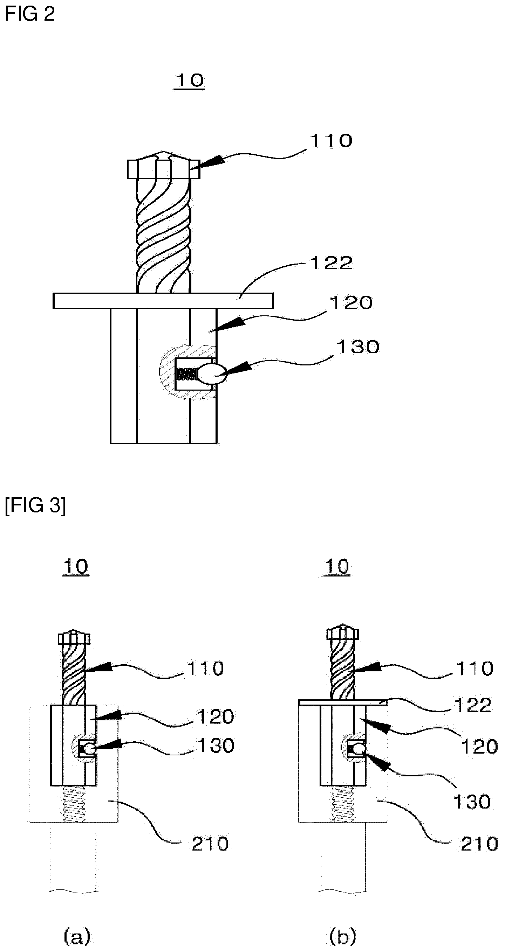

As illustrated in FIG. 2, the drill bit 10 includes a drilling part 110, a first insertion part 120, and a ball plunger 130.

The drilling part 110 functions to form a hole having a certain depth in the ceiling slab made of concrete. The drilling part 110 is formed in the same structure, the same shape, and the same material as the drill bit for forming the hole in the concrete slab, and thus a detailed description thereof will be omitted here.

The first insertion part 120 is formed at one end of the drilling part 110, supports the one end of the drilling part 110 to maintain a state of being firmly fixed to one end of the connecting rod 20, and thus allows the drilling part 110 to perform a drilling operation for the slab with a hitting and rotational force provided through the connecting rod 20.

In this case, the first insertion part 120 is formed in a polygonal shape or circular shape, one side of which forms a flat surface. That is, the first insertion part 120 may have a structure or shape as long as the structure and shape may be detachably attached to the one end of the connecting rod 20 and may firmly transmit the hitting rotational force of the connecting rod 20 to the drill bit 10 when inserted into the one end of the connecting rod 20.

Further, since the first insertion part 120 and the drilling part 110 are integrally manufactured, any structure in which the concrete drilling part 110 is firmly fixed or any structure similar thereto may be adopted.

Further, the first insertion part 120 includes a catching step 122 that is formed between a lower end of the drilling part 110 and an upper end of the first insertion part 120 and prevents drilling at an excessive depth to precisely construct an anchor.

Further, the catching step 122 extends from the first insertion part 120 at certain width and thickness, and when the first insertion part 120 is inserted into a seating groove of a seating part 210, as a state of being caught on one end of the seating part 210 is maintained, the first insertion part 120 may be easily extracted from the seating part 210.

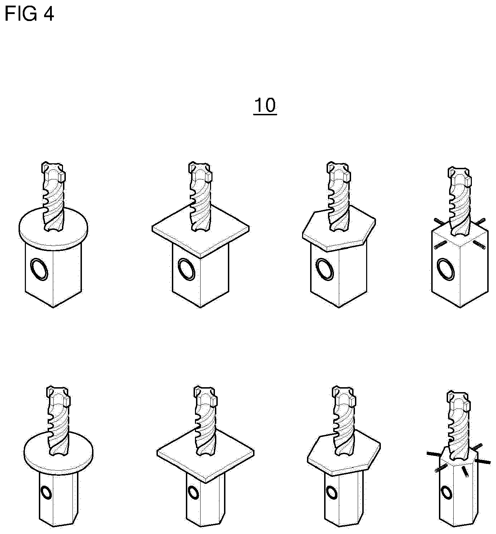

That is, as illustrated in FIG. 4, the first insertion part 120 is formed in a quadrangular shape or hexagonal shape, and the catching step 122 formed at one end of the first insertion part 120 is formed in a circular shape, a quadrangular shape, a hexagonal shape, or the like. Of course, the present invention is not limited thereto, and the first insertion part 120 or the catching step 122 may adopt any shape or structure as long as the shape or structure allows the first insertion part 120 or the catching step 122 to be easily inserted into the seating part 210 of the connecting rod 20 and allows the drill bit 10 to be stably hit and rotated by the hitting rotational force provided by the connecting rod 20.

For example, a separate catching step 122 is not formed in the first insertion part 120, and as illustrated in FIG. 4, at least one headless bolt or fixing pin is formed radially along an outer circumference of the first insertion part 120, thereby functioning as the catching step 122.

The ball plunger 130 is formed on one side of the first insertion part 120, and when the first insertion part 120 is inserted into the seating part 210 of the connecting rod 20, the drill bit 10 is prevented from being arbitrarily separated from the seating part 210 of the connecting rod 20 by a pressing force of the ball plunger 130, and thus safety is secured. In some cases, the ball plunger 130 may be omitted.

The connecting rod 20 is seated on one end of the drill gun 40, the drill bit 10 or the anchor bolt set 30 for the drilling operation is selectively mounted on the other end of the drill gun 40 according to a process to be worked, and thus the connecting rod 20 supports the drilling gun 40 so that the worker may perform drilling work, set the anchor bolt, and install the full thread bolt in place.

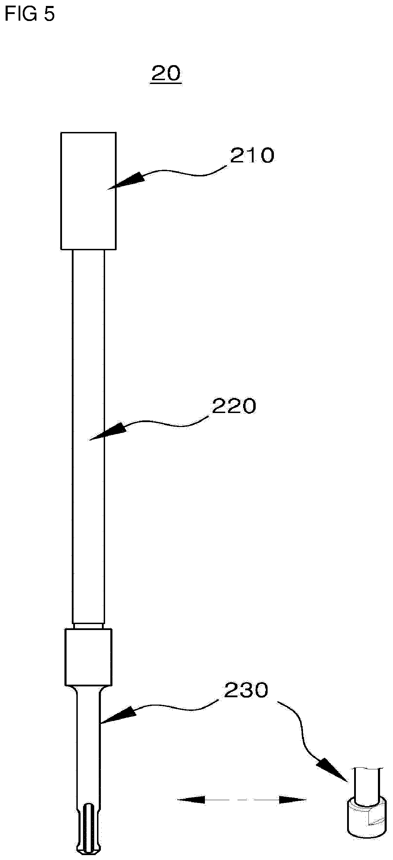

As illustrated in FIG. 5, the connecting rod 20 includes the seating part 210, an extension part 220, and a fixing chuck 230.

As the first insertion part 120 of the drill bit 10 is seated in a center of the seating part 210, the seating part 210 supports the connecting rod 20 so that the drill bit 10 is fixed to the connecting rod 20.

Further, a seating groove which is formed at a certain depth and into which the first insertion part 120 is inserted is formed at the center of the seating part 210. In this case, the seating groove of the seating part 210 is formed in a shape corresponding to the first insertion part 120.

The extension part 220 is formed at a certain length and is formed at a length at which the worker drills the ceiling slab, sets the anchor bolt, and installs the full thread bolt in place on the ground.

The fixing chuck 230 is formed at an end of the extension part 220 and functions to support the extension part 220 so that the fixing chuck 230 is fixed to one end of the drill gun 40.

In this case, as illustrated in FIG. 5, the fixing chuck 230 may be replaced with any component having a structure or shape as long as the structure or shape allows the fixing chuck 230 to be stably fixed to one end of the drill gun 40, for example, a hammer drill or an impact drill.

The anchor bolt set 30 functions to fix the full thread bolt so that the full thread bolt extends by a certain length from the hole formed in the ceiling slab.

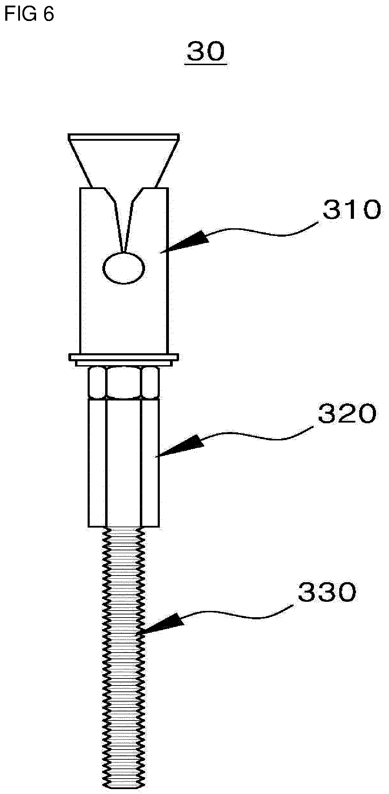

As illustrated in FIG. 6, the anchor bolt set 30 includes an anchor part 310, a second insertion part 320, and a full thread bolt 330.

The anchor part 310 is inserted into the hole formed in the ceiling slab through the drill bit 10, is driven and expanded by the rotational force and the hitting force of the drill gun 40, and thus is maintained in a state of being fixed to the ceiling slab. In this case, the anchor part 310 is formed in the same or similar structure or configuration as an anchor bolt according to the related art, is driven in the ceiling slab and expanded by a hitting force and a rotational force externally applied, and thus is maintained in a fixed state.

The second insertion part 320 is formed at one end of the anchor part 310 and performs a function of setting such that, as the second insertion part 320 is inserted into the seating part 210 of the connecting rod 20, the second insertion part 320 receives the hitting force and the rotational force acting from the drill gun 40 through the connecting rod 20 to fix the anchor part 310 to the ceiling slab. In this case, the second insertion part 320 is formed in the same or similar shape as the seating groove formed in the seating part 210 of the connecting rod 20. The second insertion part 320 is a connection nut that connects the anchor bolt and the full thread bolt.

The full thread bolt 330 is formed in a certain length at one end of the second insertion part 320 and thus functions to form the full thread bolt having a certain length in the ceiling slab as in the related art. For example, the full thread bolt 330 is a stay bolt having a certain length.

As illustrated in FIG. 5, the drill gun 40 has one end fixed to the fixing chuck 230 of the connecting rod 20 and functions to generate the rotational force and the hitting force to substantially provide, through the connecting rod 20, the rotational force or hitting force to the drill bit 10 or the anchor bolt set 30 formed at one end of the connecting rod 20. In this case, the drill gun 40 is a hammer drill or an impact drill. Of course, the present invention is not limited thereto, and an electric tool may be used as the drill gun 40 as long as the electric tool is connected to the fixing chuck 230 of the connecting rod 20 to provide the rotational force or the hitting force.

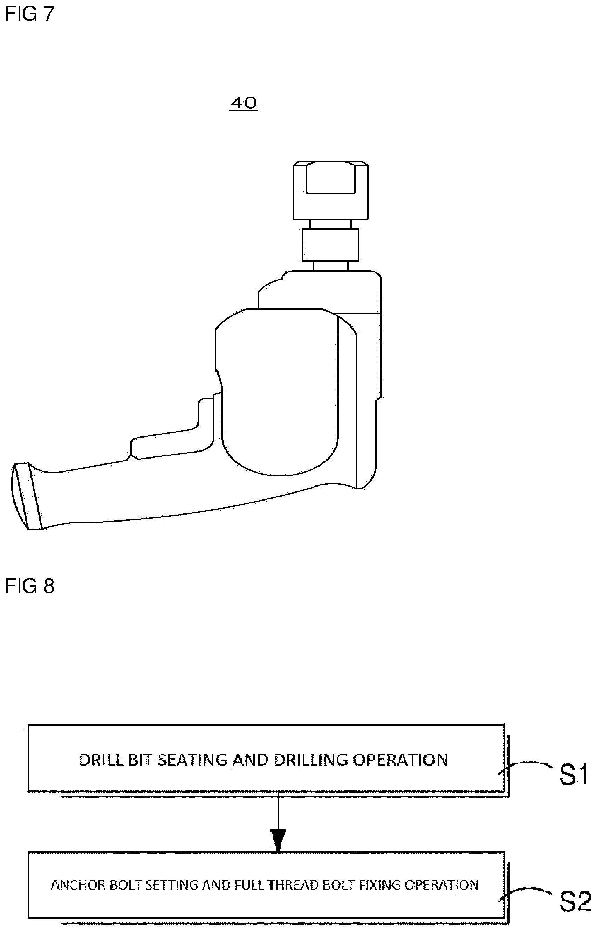

As illustrated in FIG. 8, a method of constructing a full thread bolt using a jig tool set for constructing the full thread bolt as described above includes a drill bit seating and drilling operation S 1 and an anchor bolt setting and full thread bolt fixing operation S2.

In the drill bit seating and drilling operation S1, the one end of the drill gun 40 is fixed to the fixing chuck 230 of the connecting rod 20, the first insertion part 120 of the drilling bit 10 is inserted into the seating part 210 of the connecting rod 20, and thus the drill gun 40 is mounted on the one end of the connecting rod 20, and the drill bit 10 is mounted on the other end thereof.

Through the drill bit seating and drilling operation S 1, in a state in which the drill gun 40 is formed at the one end of the connecting rod 20 and the drill bit 10 is formed at the other end thereof, after the worker grips the drill gun 40 on the ground, the worker positions the drill bit 10 formed at the one end of the connecting rod 20 on the ceiling slab.

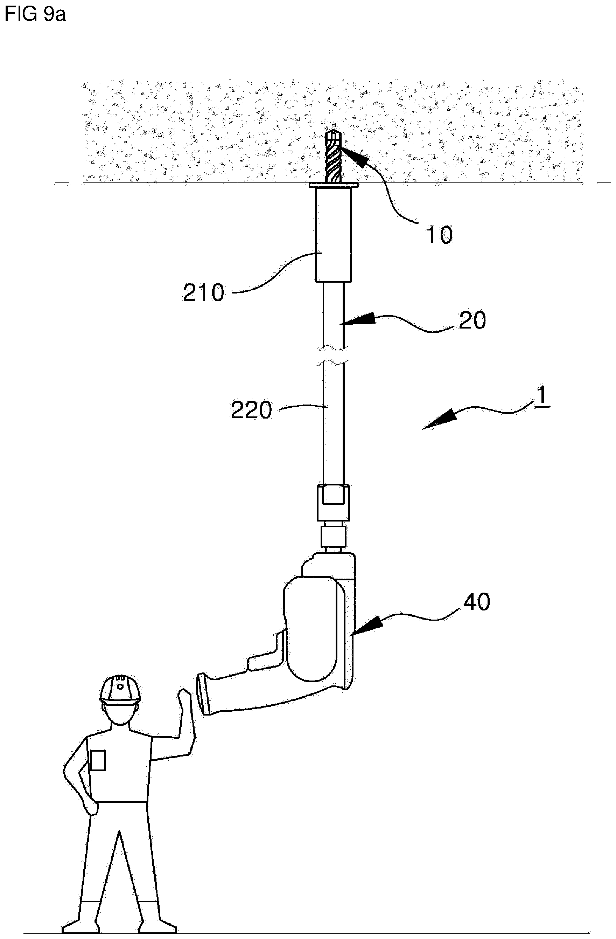

Thereafter, as illustrated in FIG. 9A, when the worker operates the gripped drill gun 40, the connecting rod 20 is rotated and hit by the hitting rotational force generated by the drill gun 40, the drill bit 10 mounted on the connecting rod 20 is hit and rotated by the hitting rotational force of the connecting rod 20, and thus the hole having a certain depth is formed in the ceiling slab.

In the anchor bolt setting and full thread bolt fixing operation S2, when the hole having a certain length is formed in the ceiling slab through the drill bit seating operation S1, the drill bit 10 mounted on the one end of the connecting rod 20 is extracted. Further, after the second insertion part 320 is fastened to the anchor bolt set 30, when the full thread bolt 330 is connected to the second insertion part 320 and is then inserted into the seating part 210 of the connecting rod 20, both the anchor bolt set 30 and the full thread bolt 330 are simultaneously mounted on the seating groove of the seating part 210. The anchor bolt set 30 is inserted into the hole having a certain depth, which is formed in the ceiling slab.

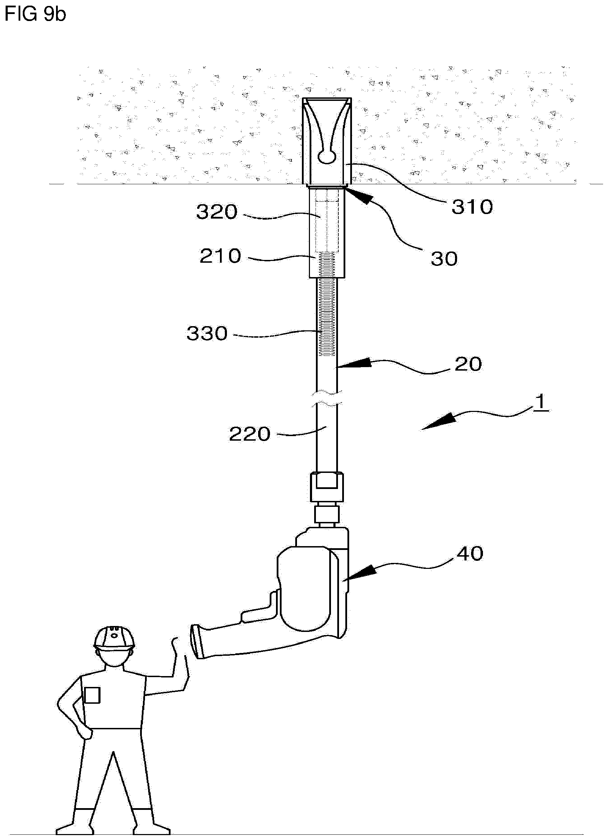

Thereafter, as illustrated in FIG. 9B, when the worker applies a pressing force of pushing the drill gun 40 upward while operating the gripped the drill gun 40, the connecting rod 20 is hit and rotated by the hitting force and the rotational force generated by the drill gun 40, the hitting and rotating of the connecting rod 20 causes hitting and rotating of the anchor bolt set 30 mounted on the connecting rod 20, and accordingly, the anchor part 310 extends from the hole of the ceiling slab and is fixed in a driven state.

Further, when the anchor bolt set 30 is completely fixed to the ceiling slab, and when the connecting rod 20 to which the drill gun 40 is fixed lowers and the anchor bolt set 30 is separated from the connecting rod 20, the full thread bolt 330 of the anchor bolt set 30 maintains fixed to the ceiling slab.

Accordingly, the worker does not climb on a high-place workbench to perform the drilling work using the drill bit 10 and install the full thread bolt 330 using the anchor bolt set 30 on the ground. Therefore, as in the related art the risk of falling accidents, which may occur when the worker climbs on the high-place workbench to perform the drilling work and install the full thread bolt, is blocked.

Further, in the related art, a job labor roughly has four stages including installation of the high-place workbench, performing of the drilling work, fixing of the anchor bolt, and installation of the full thread bolt in this order. However, in the present invention, a job labor roughly has two stages including performing of the drilling work and installation of the anchor bolt and the full thread bolt in this order. Accordingly, work efficiency is improved by reducing the job labor.

### <Second Embodiment>

The same reference numerals are used for the same components as the first embodiment, and detailed descriptions thereof will be omitted.

The connecting rod 20 according to the second embodiment is provided as a plurality of connecting rods 20 and may be connected and used according to a height of the ceiling slab on the ground. Accordingly, regardless of the height of the ceiling slab, the drilling work, the setting of the anchor bolt, and the installation of the full thread bolt may be performed from the ground. In this case, as the connecting rod 20 is formed in a separable type, the extension part 220 may be continuously connected. Of course, the present invention is not limited thereto, and the connecting rod 20 may be also configured such that the seating part 210, the extension part 220, and the fixing chuck 230 are integrally formed and only the length of the extension part 220 extends according to the height of the ceiling slab.

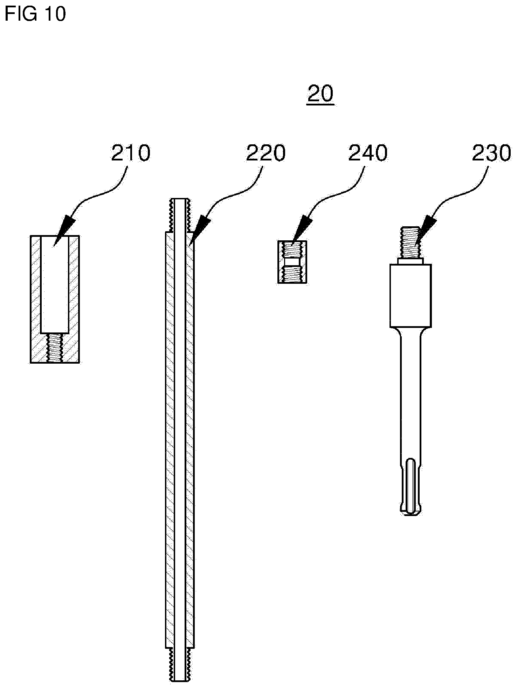

As illustrated in FIG. 10, the connecting rod 20 includes the seating part 210, the extension part 220, and the fixing chuck 230 and includes a socket coupler 240 that is formed between a plurality of extension parts 220 and supports the plurality of extension parts 220 so that the extension parts 220 maintain a fixed state.

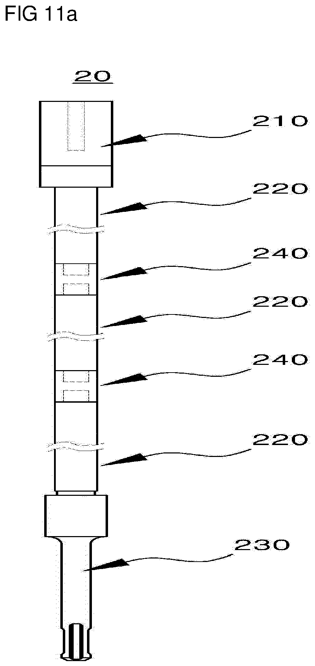

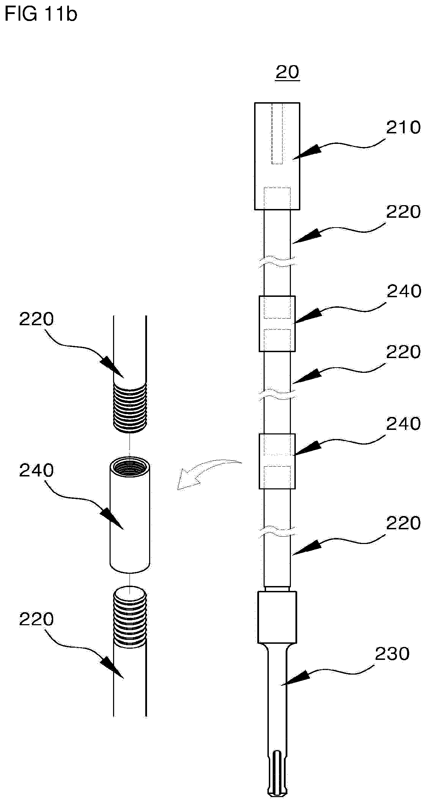

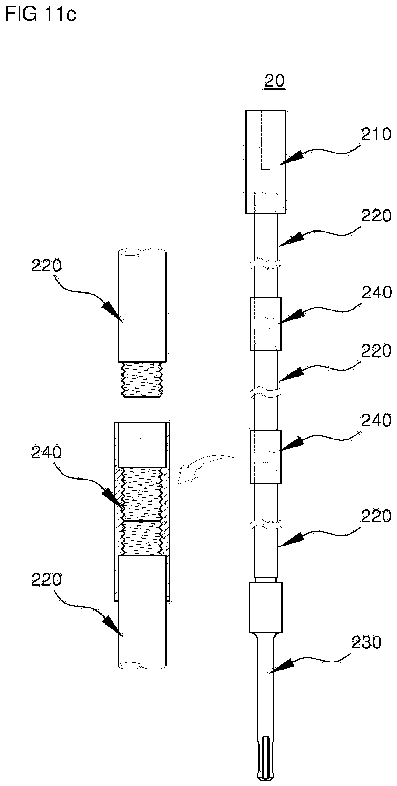

That is, as illustrated in FIG. 11, the fixing chuck 230 is formed at one end of the extension part 220, the seating part 210 is formed at the other end of the extension part 220, the extension part 220 is provided as the plurality of extension parts 220 according to the height of the ceiling slab, and the socket coupler 240 is formed between the plurality of extension parts 220 and is thus formed so that the plurality of extension parts 220 maintain a fixed state.

Further, the connecting rod 20 adopts a screw fastening method so that the seating part 210, the extension part 220, the fixing chuck 230, and the socket coupler 240 may be separated from or assembled with each other.

For example, male threads are formed at both ends of the extension part 220, and female threads are formed in the seating part 210, the fixing chuck 230, and the socket coupler 240 to be coupled to the male threads of the extension part 220. Further, the made threads and the female threads may be interchanged with each other as needed.

Further, as illustrated in FIG. 11B, the male thread is formed at the end of the extension part 220 without reducing a diameter thereof, and the female thread is formed at the socket coupler 240 corresponding thereto so that the male thread of the extension part 220 is fastened to the female thread. Accordingly, damage to a connection portion between the extension part 220 and the socket coupler 240 due to an impact applied from the lateral side is prevented.

Further, as illustrated in FIG. 11C, the male thread is formed at the end of the extension part 220 and is formed in a stepped shape in which a screw thread is formed to have a diameter slightly smaller than an outer diameter thereof, and the female thread is formed in the socket coupler 240 in a stepped shape on an inside thereof to correspond to the male thread formed in the extension part 220 in the stepped shape. Accordingly, when the end of the extension part 220 is screw-coupled into the socket coupler 240, an insertion portion has a structure supported by the socket coupler 240 as a whole, and thus a reinforcement force is further strengthened.

Of course, the present invention is not limited thereto, and any structure or configuration may be used as long as the structure or configuration enables mutual disassembly and assembly of the seating part 210, the extension part 220, the fixing chuck 230, and the connection bracket 240 of the connecting rod 20.

### <Third Embodiment>

The same reference numerals are used for the same components as the first and second embodiments, and detailed descriptions thereof will be omitted.

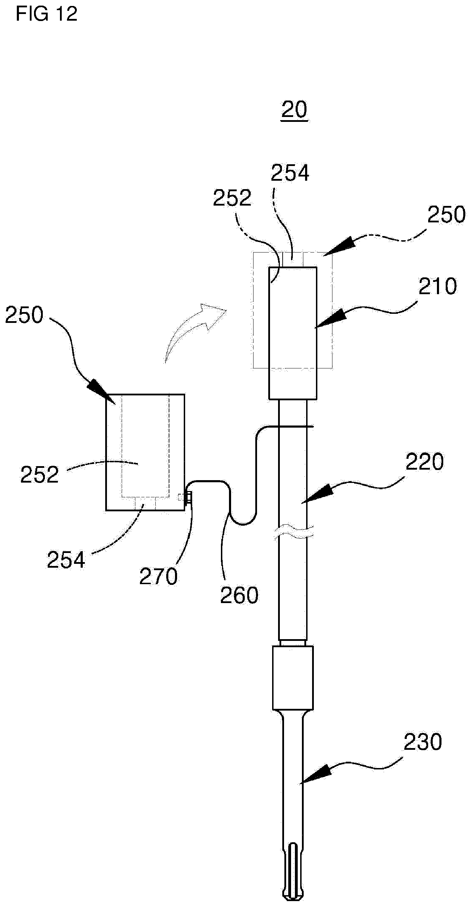

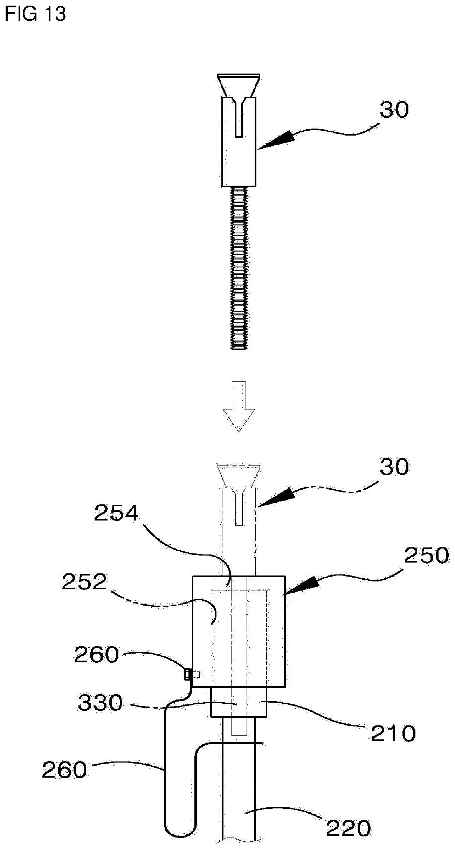

As illustrated in FIGS. 12 and 13, the connecting rod 20 according to a 3rd embodiment includes a setting holder 250 that is mounted on the seating part 210 and supports the anchor bolt set 30 to use the anchor bolt set 30 in a general purpose regardless of the sizes of the seating part 210 and the anchor bolt set 30 by preventing the anchor bolt set 30 from being not seated on the seating part 210 as a diameter of the anchor bolt set 30 is small when the anchor bolt set 30 is seated on the seating part 210 to install the full thread bolt.

The setting holder 250 is seated to cover an upper end of the seating part 210 and thus may be used in a general purpose regardless of the size of the anchor bolt set 30 seated thereon.

An insertion groove 252 which has one open end and is recessed inward in a certain depth and into which the seating part 210 is inserted is formed in the setting holder 250.

Further, an insertion hole 254 passing through the insertion groove 252 so that the full thread bolt 330 of the anchor bolt set 30 seated on the setting holder 250 may be inserted through the insertion groove 252 is formed in the setting holder 250. In this case, the insertion hole 254 is formed in a size in which the full thread bolt 330 may be inserted thereinto.

In summary, when a hole is drilled in a ceiling using the drill bit mounted on the seating part 210, the setting holder 250 is mounted at an upper end of the seating part 210 of the connecting rod 20, the full thread bolt 330 is assembled with a screw thread inside the anchor bolt set 30, and the setting holder 250 at an upper end of the connecting rod 20 and the anchor bolt set 30 and the full thread bolt 330 assembled with the connecting rod 20 are then seated, the anchor bolt set 30 is positioned at an upper end of the setting holder 250. When the anchor part 310 is set to be fixed to the ceiling slab by receiving the rotational force and the hitting force acting from the drill gun 40 through the connecting rod 20, a function of installing up to the full thread bolt 330 at once is performed.

Further, the connecting rod 20 includes a falling prevention bolt 270 that fixes the seating part 210 and the setting holder 250 so that the setting holder 250 maintains a state of being formed on one side of the seating part 210 of the connecting rod 20 to prevent the risk of loss and fall, and a separation prevention string 260 that may be used as a second best solution when the falling prevention bolt 270 is lost.

The separation prevention string 260 is formed between the connecting rod 20 and the falling prevention bolt 270, is formed in a length in which the separation prevention string 260 may be detachably attached to the seating part 210 of the connecting rod 20 and maintains a state in which the setting holder 250 is formed in the connecting rod 20.

The falling prevention bolt 270 is formed on one side of the setting holder 250 so that one end of the separation prevention string 260 is fixed thereto.

### <Fourth Embodiment>

The same reference numerals are used for the same components as the first to third embodiments, and detailed descriptions thereof will be omitted.

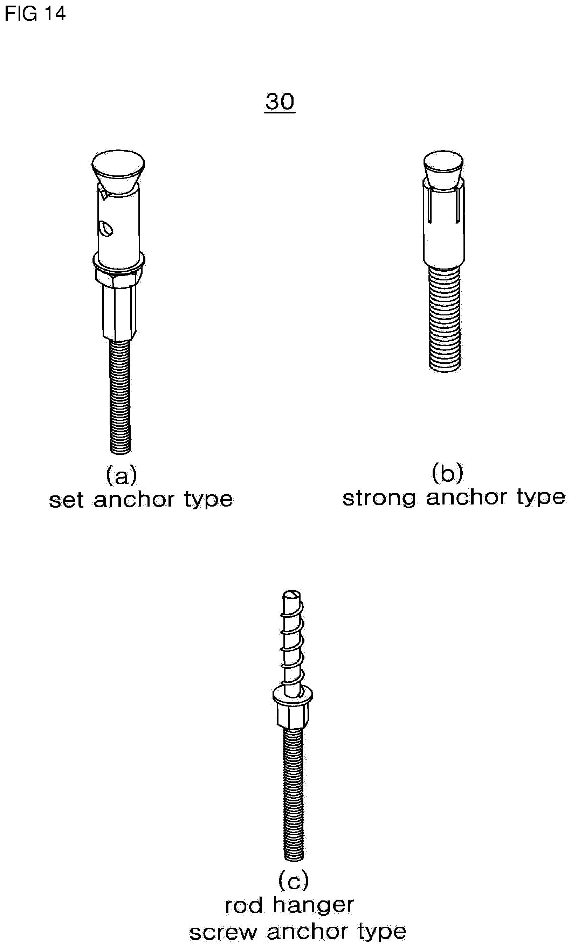

As illustrated in FIG. 14, various anchor bolts provided in the related art may be adopted and used as the anchor part 310 of the anchor bolt set 30 according to a fourth embodiment.

That is, the anchor part 310 of the anchor bolt set 30 is a set anchor as in FIG. 14A, is a strong anchor as in FIG. 14B, and is a bolt hanger screw anchor as in FIG. 14C. The screw anchor (c) for the full thread bolt is formed using the same process as the method of constructing the anchor bolt set according to the first embodiment. However, since an inside of the bolt hanger screw anchor is a female thread, the second insertion part 320 is not required, and thus for construction, the full thread bolt 330 is directly connected thereto.

### <Fifth Embodiment>

The same reference numerals are used for the same components as the first to fourth embodiments, and detailed descriptions thereof will be omitted.

The extension part 220 and the fixing chuck 230 according to a fifth embodiment are fixed in various manners.

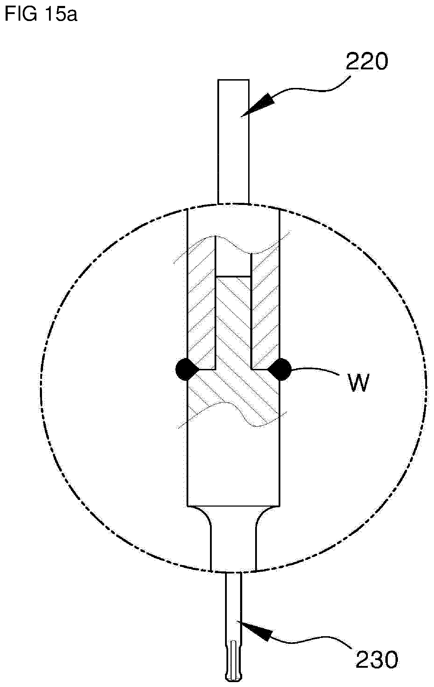

For example, as illustrated in FIG. 15A, mutual contact portions of the extension part 220 and the fixing chuck 230 are fused by a welding method W and thus integrated.

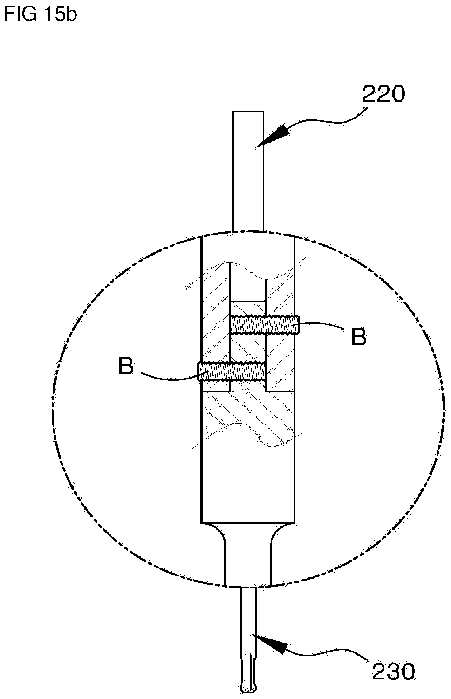

Alternatively, as illustrated in FIG. 15B, after one end of the fixing chuck 230 is inserted into the extension part 220, at least one set screw S is fastened to the extension part 220, and thus the extension part 220 and the fixing chuck 230 are integrated through the set screw S.

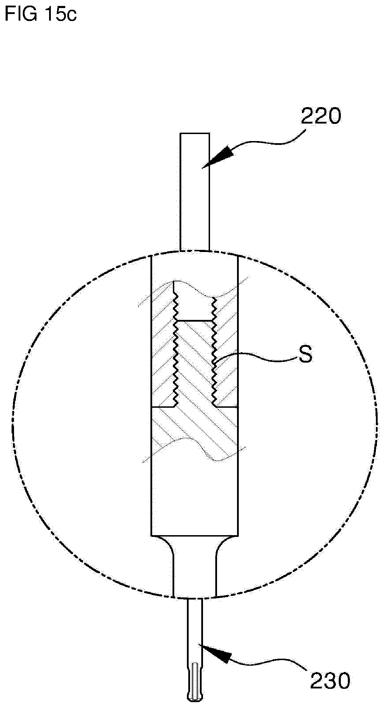

Alternatively, as illustrated in FIG. 15C, a female thread is formed on an inside of the extension part 220, and a male thread having a certain length is formed at the one end of the fixing chuck 230. Thus, the male thread of the fixing chuck 230 is fastened to the female thread of the extension part 220 so that the extension part 220 and the fixing chuck 230 are integrated.

### <Sixth Embodiment>

The same reference numerals are used for the same components as the first to fifth embodiments, and detailed descriptions thereof will be omitted.

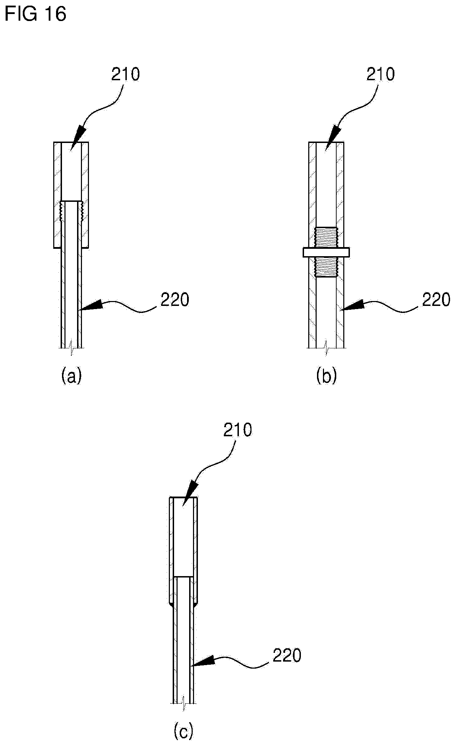

As illustrated in FIG. 16A, in the seating part 210 and the extension part 220 according to a sixth embodiment, a female thread is formed at a certain depth inside the seating part 210, a male thread is formed at one end of the extension part 220, and the male screw is fastened in a state in which the one end of the extension part 220 is inserted into the seating part 210 at a certain depth. Accordingly, a reinforcement force between the seating part 210 and the extension part 220 is reinforced, and a coupling state therebetween is maintained.

Alternatively, as illustrated in FIG. 16B, female threads are formed in the seating part 210 and the extension part 220, a connection socket is formed between the seating part 210 and the extension part 220 and has male screws formed therein and fastened to the female threads, and thus a mutual coupling force between the seating part 210 and the extension part 220 is maintained.

Alternatively, as illustrated in FIG. 16C, after the extension part 220 is inserted into the seating part 210 at a certain depth, the seating part 210 and the extension part 220 are integrated by welding.

Of course, the present invention is not limited thereto, and any structure or configuration may be adopted as the seating part 210 and the extension part 220 as long as the structure or configuration may integrate the seating part 210 and the extension part 220 according to a manufacturing method and stably fix the seating part 210 and the extension part 220.

### <Seventh Embodiment>

The same reference numerals are used for the same components as the first to sixth embodiments, and detailed descriptions thereof will be omitted.

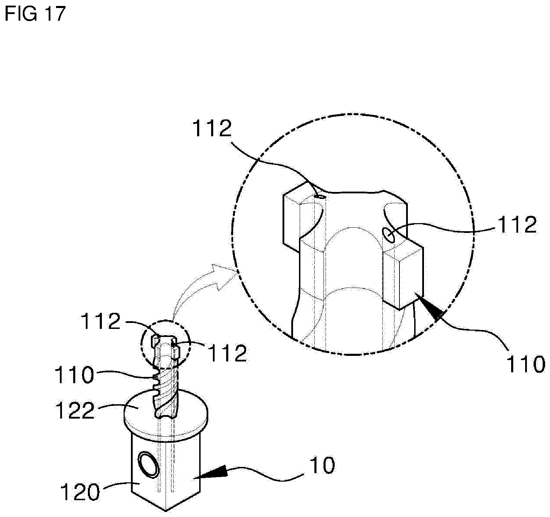

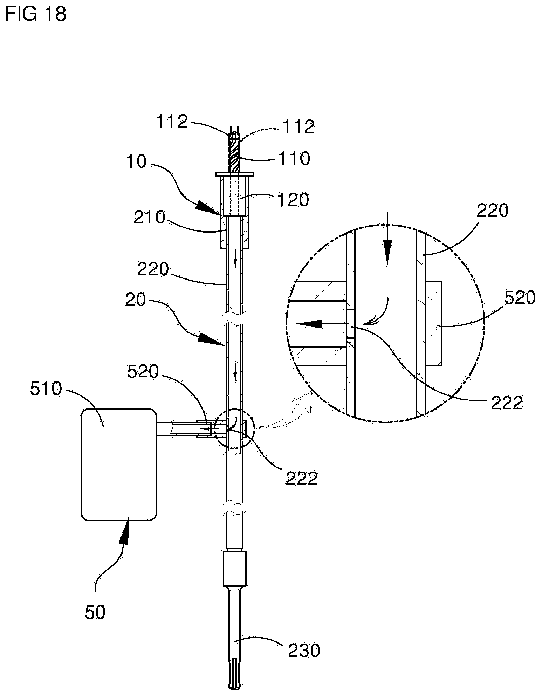

As illustrated in FIGS. 17 and 18, the drill bit 10 according to a seventh embodiment includes at least one inlet 112 for improving a work environment by minimizing or preventing scattering to the outside by suctioning crushed power or dust generated while the ceiling slab is drilled through the drilling part 110.

The inlet 112 is formed in the drilling part 110 of the drill bit 10. Of course, the present invention is not limited thereto. The inlet 112 is formed to penetrate one side of the drill bit 10, for example, the first insertion part 120 and may include any structure or shape as long as the structure and shape prevents the crushed power or the like from being scattered arbitrarily as the crushed power or the like generated during the drilling work is collected inside the seating part 210 and the extension part 220 of the connecting rod 20 into which the first insertion part 120 is inserted.

Further, the jig tool set for constructing a full thread bolt includes a vacuum suction part 50 that prevents the crushed powder or the like from being scattered into a work space by vacuum-suctioning the crushed powder or the like collected inside the connecting rod 20.

The vacuum suctioning part 50 is formed on one side of the connecting rod 20, for example, one side of the extension part 220, allows the crushed powder or the like suctioned through the inlet 112 formed in the drill bit 10 to be quickly collected to the outside, and thus may fundamentally prevent the scattering of the crushed power or the like during working. In this case, at least one outlet 222 that penetrates an inside and allows the crushed powder or the like to be quickly discharged by a vacuum suction force of the vacuum suction part 50 is formed in the connecting rod 20, that is, on one side of the extension part 220. Further, a stopper (not illustrated) that opens or closes the outlet 222 to prevent foreign substances from penetrating into the outlet 222 is formed in the outlet 222.

The vacuum suction part 50 includes a vacuum suction device 510 and a connection connector 520.

The vacuum suction device 510 functions to generate a vacuum pressure.

As the connection connector 520 is connected to one end of the vacuum suction device 510 and the other end thereof is connected to the outlet 222 of the extension part 220, the vacuum pressure generated by the vacuum suction device 510 is applied to the outlet 222, and thus the crushed powder or the like may be discharged through the outlet 222. In this case, the connection connector 520 does not interfere with the rotating extension part 220 by the drilling work of the drill bit 10 while connected to the extension part 220.

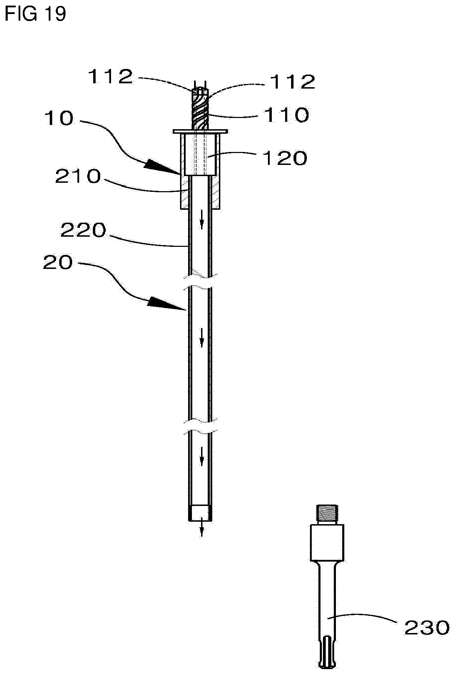

Meanwhile, as illustrated in FIG. 19, when the fixing chuck 230 is separated from the extension part 220 without the separate vacuum suction part 50 being formed, the crushed powder or the like moving into the extension part 220 may be removed.

The above description is merely an embodiment for implementing the jig tool set for constructing a full thread bolt and the method of constructing a full thread bolt using the same, and the present invention is not limited to the above embodiment. Those skilled in the art to which the present invention pertains may understand that various modifications may be made without departing from the subject matter of the present invention.

## Claims

1. A jig tool set for constructing a ceiling anchor bolt and installing a full thread bolt, the jig tool set comprising:
a drill bit in which a drilling part is formed at one end thereof to secure a hole having a certain depth by drilling a ceiling slab made of concrete;
an anchor bolt set fixed to the hole formed in the ceiling slab through the drill bit and configured to form a full thread bolt having a certain length in the ceiling slab;
a connecting rod having a certain length so that, as the drill bit and the anchor bolt set are sequentially seated at one end thereof, a worker that performs drilling work and full thread bolt installation work performs the work from the ground without moving to a location close to the ceiling slab; and
a drill gun formed at the other end of the connecting rod and configured to provide a rotational force and a hitting force so that the drilling work and the full thread bolt installation work are performed from the ground.

2. The jig tool set of claim 1, wherein the drill bit includes:
a drilling part configured to perform the drilling work on the ceiling slab made of concrete;
a first insertion part that is formed at one end of the drilling part, is inserted into one end of the connecting rod, maintains a firmly fixed state with the one end of the connecting rod, and thus supports the drilling part to perform the drilling work by the rotational force and the hitting force provided by the connecting rod; and
a ball plunger formed on one side of the first insertion part and configured to provide a control force so that the first insertion part is not arbitrarily separated when the first insertion part is inserted into the one end of the connecting rod.

3. The jig tool set of claim 1, wherein the connecting rod includes:
a seating part recessed inward in a certain depth and having a seating groove into which one end of the drill bit or the anchor bolt set is inserted;
an extension part extending from the seating part by a certain length and configured to support the worker to perform the drilling work or the full thread bolt installation work on the ground; and
a fixing chuck formed at an end of the extension part and configured to support the drill gun so that one end of the drill gun is stably fixed.

4. The jig tool set of claim 3, wherein the connecting rod includes:
a plurality of extension parts according to the ground and a height of the ceiling slab; and
a connection bracket formed between the plurality of extension parts and configured to support the extension parts so that the extension parts are used in a general purpose according to a height difference between the ground and the ceiling slab as the plurality of extension parts are fixed to each other.

5. The jig tool set of claim 1, wherein the connecting rod includes:
a setting holder pressed to one end of the connecting rod and configured to support the anchor bolt set to use the anchor bolt set in a general purpose regardless of a size of the anchor bolt set.

6. The jig tool set of claim 5, wherein the connecting rod includes:
a falling prevention bolt configured to maintain the setting holder in a state of being formed on one side of the connecting rod and support the setting holder to prevent fall or loss of the setting holder.

7. The jig tool set of claim 1, wherein the anchor bolt set includes:
an anchor part inserted into the hole formed in the ceiling slab by the drill bit and configured to provide a fixing force to maintain a state of being firmly fixed to the hole by the hitting force and the rotational force provided by the drill gun; and
a full thread bolt extending from one end of the anchor part by a certain length so that the anchor part has a certain length from the ceiling slab when the anchor part is fixed to the ceiling slab.

8. The jig tool set of claim 1, wherein the drill bit includes:
at least one inlet through which crushed powder generated during the drilling work is suctioned and which guides the crushed powder such that the crushed powder is collected inside the connecting rod.

9. The jig tool set of claim 8, wherein at least one outlet penetrating an inside so that the crushed powder moving thereinto is discharged is included on one side of the connecting rod, and
the jig tool set further includes:
a vacuum suction part formed on one side of the connecting rod and configured to prevent the crushed powder from scattering into a work space by suctioning the crushed powder generated during the drilling work by the drill bit using a vacuum pressure.

10. A method of constructing a full thread bolt using a jig tool set for constructing a ceiling anchor bolt and installing a full thread bolt, the method comprising:
a drill bit seating and drilling operation in which a drill gun is fixed to one end of a connecting rod, a drill bit is seated on the other end of the connecting rod, and when the drill gun and the drill bit are completely mounted on the connecting rod, a worker does not move to a position adjacent to a ceiling slab, positions the drill bit on the ceiling slab while gripping the drill gun on the ground, operates the drill gun to provide a hitting rotational force generated by the drill gun to the drill bit through the connecting rod, and thus forms a hole having a certain depth in the ceiling slab; and
an anchor bolt setting and full thread bolt fixing operation in which, when the hole having a certain depth is formed in the ceiling slab through the drill bit seating and drilling operation, the drill bit seated on the other end of the connecting rod is extracted, both an anchor bolt set and a full thread bolt are inserted into the connecting rod from which the drill bit is separated, and when an anchor part of the anchor bolt set is positioned toward the ceiling slab, the full thread bolt is supported to maintain a state of being inserted into the connecting rod, and the anchor bolt set is completely seated on the connecting rod, the worker does not move to a position close to the ceiling slab, inserts the anchor part of the anchor bolt set into the hole of the ceiling slab while gripping the drill gun on the ground, operates the drill gun to provide a hitting force and a rotational force generated by the drill gun to the anchor bolt set through the connecting rod, and fixes the anchor part to the ceiling slab, and thus a state in which the full thread bolt formed at one end of the anchor part in a certain length is fixed to the ceiling slab is maintained.
